# EUROPEAN PATENT SPECIFICATION

(11) **EP 4 063 145 B1**
(45) Date of publication and mention of the grant of the patent: **13.09.2023**
(21) Application number: 22160067.9
(22) Date of filing: 03.03.2022
(51) Int. Cl.: B60C 9/04, B60C 9/08, B60C 9/02, B60C 9/13, B60C 9/00

(54) **PNEUMATIC TIRE**
LUFTREIFEN
PNEUMATIQUE

(30) Priority: 25.03.2021 JP 2021052198
(43) Date of publication of application: 28.09.2022
(73) Proprietor: Sumitomo Rubber Industries, Ltd., Kobe-shi, Hyogo-ken 651-0072 (JP)
(72) Inventor: TOSHIMA, You, Kobe-shi, 651-0072 (JP); NOBUKUNI, Shingo, Kobe-shi, 651-0072 (JP)
(74) Representative: Manitz Finsterwald Patent- und Rechtsanwaltspartnerschaft mbB

(56) References cited:
- DE-A1-102018 127 897
- JP-A- 2019 098 854
- US-A1- 2017 305 204

## Description

### BACKGROUND OF THE INVENTION

### Field of the Invention

The present invention relates to a pneumatic tire.

### Background Art

Japanese Laid-Open Patent Publication No. 2020-100307 describes a pneumatic tire including a first ply and a second ply disposed outward of the first ply in a tire radial direction. The second ply includes a pair of ply pieces. Each ply piece has: a side portion extending inward in the tire radial direction from an inner end, of the ply piece, that is located in a tread portion; and a turned-up portion turned up around a corresponding one of a pair of bead cores.

In the above pneumatic tire, the modulus and the breaking strength of the first ply are set to be lower than those of the pair of ply pieces of the second ply, whereby reduction in the weight of the pneumatic tire is achieved. However, there is room for further improvement of side cut resistance.

A pneumatic tire in accordance with the preamble of claim 1 is known from JP 2019 098854 A. Related tires are described in DE 10 2018 127897 A1 and US 2017/305204 A1.

### SUMMARY OF THE INVENTION

The present invention has been made in view of the above circumstances, and a main object of the present invention is to provide a pneumatic tire that enables improvement of side cut resistance and suppression of increase in mass.

The present invention is directed to a pneumatic tire including: a tread portion; a pair of sidewall portions; a pair of bead portions having respective bead cores embedded therein; and a toroidal carcass disposed between the pair of bead portions. The carcass includes a first ply extending on and between the pair of bead portions, and a second ply disposed, in the tread portion, outward of the first ply in a tire radial direction and extending on and between the pair of bead portions. The first ply is formed as a layer of first cords. The second ply is formed as a layer of second cords. A thickness of each second cord is 1.1 to 2.0 times a thickness of each first cord.

In the pneumatic tire according to the present invention, the first ply may include a body portion extending between the bead cores of the pair of bead portions, and a pair of fold-back portions folded back, in the pair of respective bead portions, around the bead cores from an inner side to an outer side in a tire axial direction.

In the pneumatic tire according to the present invention, the second ply may include a body portion extending between the bead cores of the pair of bead portions, and a pair of fold-back portions folded back, in the pair of respective bead portions, around the bead cores from an inner side to an outer side in a tire axial direction.

In the pneumatic tire according to the present invention, each of the first cords and the second cords may be an organic fiber cord.

In the pneumatic tire according to the present invention, second ends representing the number of second cords that are included among the second cords and that are disposed per a width of 5 cm of the second ply, may be not more than first ends representing the number of first cords that are included among the first cords and that are disposed per a width of 5 cm of the first ply.

In the pneumatic tire according to the present invention, the second ends may be not less than 0.75 times the first ends.

In the pneumatic tire according to the present invention, the second ends may be equal to the first ends.

The pneumatic tire according to the present invention enables improvement of side cut resistance and suppression of increase in mass, by employing the above configurations.

### BRIEF DESCRIPTION OF THE DRAWINGS

FIG. 1 is a tire meridian cross-sectional view, including a rotation axis, of a pneumatic tire according to the present embodiment of the invention in a normal state;
FIG. 2 is a development of a carcass and a belt layer in a tread portion; and
FIG. 3 is a cross-sectional view taken at the line A-A in FIG. 1.

### DETAILED DESCRIPTION

Hereinafter, an embodiment of the present invention will be described with reference to the drawings. It should be understood that the drawings contain exaggerated expressions and expressions that differ from the dimensional ratio of the actual structure in order to help the understanding of the contents of the present invention. In addition, the same or common elements are denoted by the same reference characters throughout each embodiment of the present invention, and the redundant description thereof is omitted. Furthermore, the specific configurations shown in the embodiment of the invention and the drawings are for understanding the contents of the present invention, and the present invention is not limited to the specific configurations shown, but can be modified within the scope of the appended claims.

### [Pneumatic Tire]

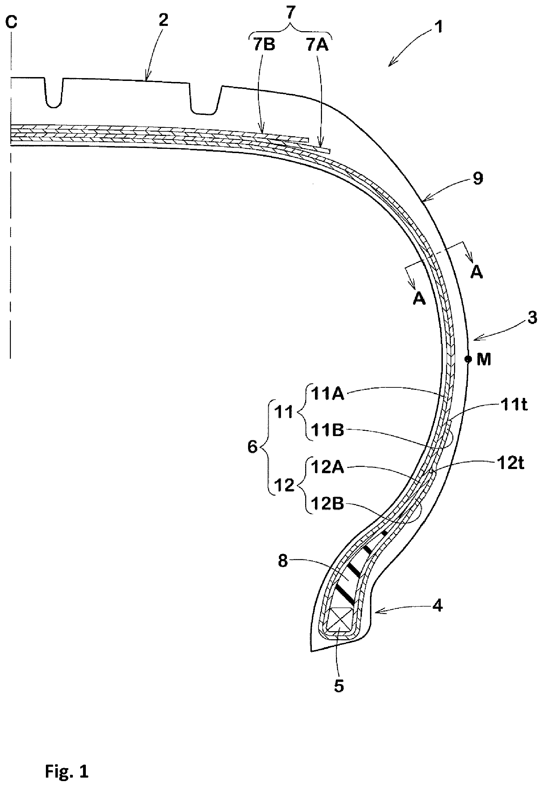

FIG. 1 is a tire meridian cross-sectional view, including a rotation axis, of a pneumatic tire (hereinafter, sometimes referred to simply as "tire") 1 according to the present embodiment of the invention in a normal state. In FIG. 1, the alternate long and short dash line indicates a tire equator (equatorial plane) C. The tire 1 according to the present embodiment of the invention is applicable to tires for passenger cars. The applicability of the tire 1 is not limited to tires for passenger cars, and the tire 1 may be applicable to, for example, heavy duty tires for buses, trucks, and the like.

The "normal state" refers to a state where: the tire 1 is mounted to a normal rim (not shown) and inflated to a normal internal pressure; and no load is applied to the tire 1. In the present description, the dimensions and the like of respective portions of the tire 1 are values measured in the normal state, unless otherwise specified.

The "normal rim" refers to a rim that is defined, in a standard system including a standard on which the tire 1 is based, by the standard for each tire. The normal rim is, for example, the "standard rim" in the JATMA standard, the "Design Rim" in the TRA standard, or the "Measuring Rim" in the ETRTO standard.

The "normal internal pressure" refers to an air pressure that is defined, in a standard system including a standard on which the tire 1 is based, by the standard for each tire. The normal internal pressure is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 according to the present embodiment of the invention includes: a tread portion 2; a pair of sidewall portions 3; a pair of bead portions 4 having respective bead cores 5 embedded therein; and a toroidal carcass 6 disposed between the pair of bead portions 4.

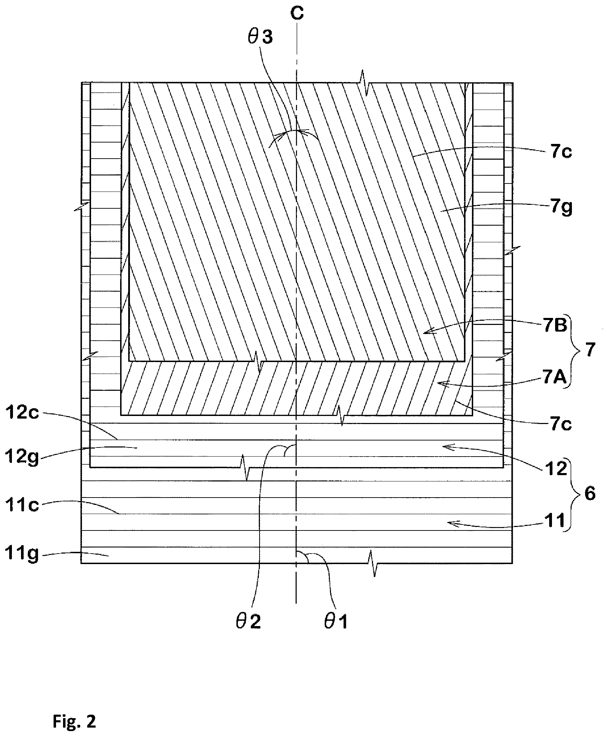

In each bead portion 4, a bead apex rubber 8 extending outward in a radial direction from the corresponding bead core 5 is disposed. Further, a belt layer 7 is disposed, inside the tread portion 2, outward of the carcass 6 in the tire radial direction. FIG. 2 is a development of the carcass 6 and the belt layer 7 in the tread portion 2.

### [Belt Layer]

As shown in FIG. 1 and FIG. 2, the belt layer 7 is formed so as to include at least one belt ply. In the present embodiment of the invention, the belt layer 7 is formed so as to include two belt plies which are an inner belt ply 7A and an outer belt ply 7B disposed on inner and outer sides in the tire radial direction.

As shown in FIG. 2, each of the inner belt ply 7A and the outer belt ply 7B is formed by, for example, coating an array of belt cords 7c with topping rubber 7g. An angle Θ3 of each belt cord 7c is set to, for example, 10 to 40 degrees with respect to the tire equator C. Although a steel cord is used as the belt cord 7c in the present embodiment of the invention, a highly elastic organic fiber cord made of aromatic polyamide, rayon, or the like may be used.

### [Carcass]

As shown in FIG. 1, the carcass 6 is formed so as to include a first ply 11 and a second ply 12 disposed, in the tread portion 2, outward of the first ply 11 in the tire radial direction.

### [First Ply]

The first ply 11 extends on and between the pair of bead portions 4. The first ply 11 in the present embodiment of the invention is formed so as to include a body portion 11A and a pair of fold-back portions 11B.

The body portion 11A extends between the bead cores 5 of the pair of bead portions 4. The pair of fold-back portions 11B are folded back, in the pair of respective bead portions 4, around the bead cores 5 from an inner side to an outer side in the tire axial direction. Such a first ply 11 can improve the rigidity of the tire 1 over a range from the tread portion 2 to the bead portions 4 (including buttress portions 9 and the sidewall portions 3). Although the first ply 11 in the present embodiment of the invention is exemplified by one including the body portion 11A and the pair of fold-back portions 11B, the first ply 11 is not limited to this configuration. The first ply 11 may be composed of, for example, only the body portion 11A.

As shown in FIG. 2, the first ply 11 is formed as a layer of first cords 11c. The first ply 11 in the present embodiment of the invention is formed so as to include: the first cords 11c arranged parallel to one another; and topping rubber 11g coating the first cords 11c. Each first cord 11c is disposed at an angle θ1 of, for example, 75 to 90 degrees with respect to the tire equator C.

As the first cord 11c, for example, an organic fiber cord, a steel cord, or the like can be used as appropriate. The first cord 11c in the present embodiment of the invention is formed as an organic fiber cord. For the organic fiber cord, for example, nylon, rayon, aromatic polyamide, or the like (in this example, nylon) can be used. Such a first cord 11c serves to improve side cut resistance.

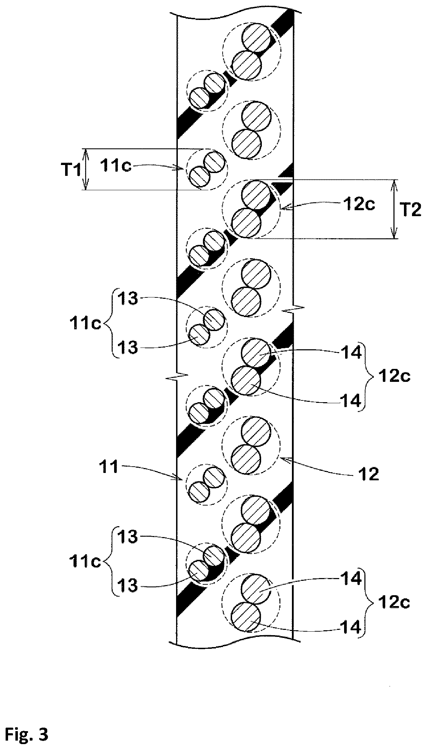

FIG. 3 is a cross-sectional view taken at the line A-A in FIG. 1. The first cord 11c in the present embodiment of the invention is formed by twisting together a plurality of strands 13. Although the first cord 11c in the present embodiment of the invention is formed of the two strands 13, the first cord 11c may be formed of three or more strands. Each strand 13 is obtained through first twisting of a bundle of filaments. One first cord 11c is formed through second twisting of these strands 13. The number of times of first twisting, the number of times of second twisting, and the like can be set, as appropriate, in the same manner as in the conventional art.

### [Second Ply]

As shown in FIG. 1, the second ply 12 extends on and between the pair of bead portions 4. The second ply 12 in the present embodiment of the invention is formed so as to include a body portion 12A and a pair of fold-back portions 12B.

The body portion 12A extends between the bead cores 5 of the pair of bead portions 4. The pair of fold-back portions 12B are folded back, in the pair of respective bead portions 4, around the bead cores 5 from the inner side to the outer side in the tire axial direction. Such a second ply 12 can improve the rigidity of the tire 1 over the range from the tread portion 2 to the bead portion 4 (including the buttress portions 9 and the sidewall portions 3), in the same manner as the first ply 11. Although the second ply 12 in the present embodiment of the invention is exemplified by one including the body portion 12A and the pair of fold-back portions 12B, the second ply 12 may be composed of, for example, only the body portion 12A.

It is desirable that an outer end 12t in the tire radial direction of each of the pair of fold-back portions 12B is tire radially displaced from an outer end 11t in the tire radial direction of the corresponding one of the pair of fold-back portions 11B of the first ply 11. Consequently, large rigid steps can be prevented from being formed in the sidewall portions 3. The outer end 12t of the second ply 12 in the present embodiment of the invention is located inward of the outer end 11t of the first ply 11 in the tire radial direction.

As shown in FIG. 2, the second ply 12 is formed as a layer of second cords 12c. The second ply 12 in the present embodiment of the invention is formed so as to include: the second cords 12c arranged parallel to one another; and topping rubber 12g coating the second cords 12c. Each second cord 12c is disposed at an angle Θ2 of, for example, 75 to 90 degrees with respect to the tire equator C.

The second cord 12c can be formed as, for example, an organic fiber cord, a steel cord, or the like as appropriate. The second cord 12c in the present embodiment of the invention is formed as an organic fiber cord. The same organic fiber cord as that forming the first cord 11c is used as the organic fiber cord forming the second cord 12c in the present embodiment of the invention. Such a second cord 12c serves to improve the side cut resistance. Alternatively, an organic fiber cord (for example, an organic fiber cord having a higher strength than the first cord) different from the first cord 11c may be used as the organic fiber cord forming the second cord 12c.

As shown in FIG. 3, the second cord 12c in the present embodiment of the invention is formed by twisting together a plurality of (in this example, two) strands 14 in the same manner as the first cord 11c.

The tire 1 according to the present embodiment of the invention can ensure the rigidity thereof by the first ply 11 and the second ply 12, over a range (shown in FIG. 1) from each buttress portion 9 between the tread portion 2 and the corresponding sidewall portion 3 to the sidewall portion 3. Therefore, the side cut resistance of the tire 1 according to the present embodiment of the invention can be improved. Further, the improvement of the side cut resistance enables the rubber thickness of the tire 1 according to the present embodiment of the invention to be reduced over the range from the buttress portion 9 to the sidewall portion 3. Consequently, the tire 1 according to the present embodiment of the invention can realize suppression of increase in the mass of the tire 1 and reduction in the rolling resistance thereof.

### [Thicknesses of First Cord and Second Cord]

In the tire 1 according to the present embodiment of the invention, a thickness T2 of the second cord 12c is set to be 1.1 to 2.0 times a thickness T1 of the first cord 11c as shown in FIG. 3, in order to further improve the side cut resistance.

If the first cord 11c and the second cord 12c are organic fiber cords, the thicknesses T1 and T2 in the present description are each defined as a total fineness (dtex). Meanwhile, if the first cord 11c and the second cord 12c are metal cords (steel cords or the like), the thicknesses T1 and T2 are each defined as a diameter (mm) including the diameter of a bundle of element wires.

In the present embodiment of the invention, since the thickness T2 of the second cord 12c is set to be not smaller than 1.1 times the thickness T1 of the first cord 11c, the rigidity of the second ply 12 to which great impact is transmitted during running, can be improved more than the rigidity of the first ply 11. Consequently, the side cut resistance of the tire 1 can be improved.

Meanwhile, since the thickness T2 of the second cord 12c is set to be not larger than 2.0 times the thickness T1 of the first cord 11c, the mass of the second ply 12 can be prevented from increasing beyond necessity. Consequently, in the present embodiment of the invention, increase in the mass of the tire 1 can be suppressed.

In this manner, in the tire 1 according to the present embodiment of the invention, the thickness T2 of the second cord 12c is set to be 1.1 to 2.0 times the thickness T1 of the first cord 11c. Thus, it is possible to improve the side cut resistance of the tire 1 and suppress increase in the mass thereof. In order to effectively exhibit such advantageous effects, the thickness T2 of the second cord 12c is preferably not smaller than 1.3 times the thickness T1 of the first cord 11c, and meanwhile, preferably not larger than 1.8 times the thickness T1 of the first cord 11c.

The thickness (total fineness) T1 of the first cord 11c and the thickness (total fineness) T2 of the second cord 12c can be set as appropriate as long as the above relationship is satisfied.

The thickness (total fineness) T1 of the first cord 11c is desirably set to 2000 to 3200 dtex. If the thickness T1 is set to be not smaller than 2000 dtex, the rigidity of the first ply 11 can be maintained, and thus the side cut resistance can be improved. Meanwhile, if the thickness T1 is set to be not larger than 3200 dtex, the mass of the first ply 11 can be prevented from increasing beyond necessity. From this viewpoint, the thickness T1 is preferably not smaller than 2200 dtex, and meanwhile, preferably not larger than 3000 dtex.

The thickness (total fineness) T2 of the second cord 12c is desirably set to 3000 to 4600 dtex. If the thickness T2 is set to be not smaller than 3000 dtex, the rigidity of the second ply 12 can be improved, and thus the side cut resistance can be improved. Meanwhile, if the thickness T2 is set to be not larger than 4600 dtex, the mass of the second ply 12 can be prevented from increasing beyond necessity. From this viewpoint, the thickness T2 is preferably not smaller than 3200 dtex, and meanwhile, preferably not larger than 4400 dtex.

### [Ends of First Ply and Second Ply]

First ends representing the number of first cords 11c that are included among the first cords 11c and that are disposed per a width of 5 cm of the first ply 11, and second ends representing the number of second cords 12c that are included among the second cords 12c and that are disposed per a width of 5 cm of the second ply 12, can be set as appropriate. The width, of the first ply 11, on the basis of which the ends are specified is measured in a direction orthogonal to the lengthwise direction of the first cord 11c. Meanwhile, the width, of the second ply 12, on the basis of which the ends are specified is measured in the direction orthogonal to the lengthwise direction of the second cord 12c.

If the second ends are more than the first ends, the mass of the second ply 12 increases beyond necessity, whereby there is a concern that the mass of the tire 1 increases. Further, a plurality of the second cords 12c tend to be interposed between the first cords 11c adjacent to each other in a tire circumferential direction owing to a rubber flow at the time of vulcanizing and molding. Consequently, the rubber thicknesses between the first cords 11c and the second cords 12c decrease, whereby there is a concern that the side cut resistance cannot be sufficiently improved. From this viewpoint, the second ends are desirably set to be not more than the first ends.

Meanwhile, if the second ends are less than the first ends beyond necessity, the rigidity of the second ply 12 cannot be sufficiently improved, whereby there is a concern that the side cut resistance cannot be sufficiently improved. Further, a plurality of the first cords 11c tend to be interposed between the second cords 12c adjacent to each other in the tire circumferential direction owing to a rubber flow at the time of vulcanizing and molding. Consequently, the rubber thicknesses between the first cords 11c and the second cords 12c decrease, whereby there is a concern that the side cut resistance cannot be sufficiently improved. From this viewpoint, the second ends are desirably set to be not less than 0.75 times the first ends.

In order to more effectively exhibit the above advantageous effects, the second ends are desirably equal to the first ends. Consequently, the tire 1 enables the first cords 11c and the second cords 12c to be alternately arranged in the tire circumferential direction owing to a rubber flow at the time of vulcanizing and molding. Thus, the rubber thicknesses between the first cords 11c and the second cords 12c can be prevented from decreasing. Further, improvement of the rigidity of the second ply 12 and suppression of increase in the mass of the second ply 12 can be realized in a balanced manner. Therefore, the tire 1 according to the present embodiment of the invention enables improvement of the side cut resistance of the tire 1 and suppression of increase in the mass thereof.

The first ends and the second ends are set as appropriate. The first ends and the second ends in the present embodiment of the invention are set to 35 to 60 (cords/5 cm). If the first ends and the second ends are set to be not less than 35 (cords/5 cm), the side cut resistance can be improved. Meanwhile, if the first ends and the second ends are set to be not more than 60 (cords/5 cm), increases in the mass of the first ply 11 and the mass of the second ply 12 can be suppressed. From this viewpoint, the first ends and the second ends are preferably not less than 40 (cords/5 cm), and meanwhile, preferably not more than 56 (cords/5 cm).

In the tire 1 according to the present embodiment of the invention, the improvement of the side cut resistance by the first ply 11 and the second ply 12 allows the outer end 11t of the first ply 11 and the outer end 12t of the second ply 12 to be located inward of a tire maximum width location M in the tire radial direction. Consequently, the mass of the first ply 11 and the mass of the second ply 12 can be inhibited from increasing beyond necessity, whereby increase in the mass of the tire 1 can be suppressed.

Although the particularly preferable embodiment of the present invention has been described above in detail, the present invention is not limited to the embodiment shown, and various modifications can be made to practice the present invention within the scope of the appended claims.

### EXAMPLES

### [Example A]

Pneumatic tires (example 1 to example 5, comparative example 1, and comparative example 2) each of which was the pneumatic tire shown in FIG. 1, were produced as samples on the basis of the specifications in Table 1. Then, for each of the tires produced as samples, the side cut resistance and the mass of the tire were evaluated. The common specifications and test methods are as follows. The results of the tests are indicated in Table 1.
Tire size: 265/65R18
Rim size: 18×8.0 J
Internal pressure: 250 kPa
Thickness of buttress portion: 6.0 mm
Thickness of sidewall portion: 3.0 mm
First ply:
   first cord: nylon (strands: two)
   first ends: 48 (cords/5 cm)
Second ply:
   second cord: nylon (strands: two)
   second ends: 48 (cords/5 cm)

### <Side Cut Resistance>

Each of the tires produced as samples was mounted on the above rim and inflated to the above internal pressure. Impact was applied to either of the sidewall portions of the tire by free fall, on the sidewall portion, of a pendulum having a weight to which a wedge-shaped blade was attached. An energy at which the sidewall portion was fractured was obtained on the basis of the mass of the weight and the height from which the falling was performed. The result was indicated as an index with the energy in comparative example 1 being regarded as 100. A larger numerical value indicates a better side cut resistance.

### <Tire Mass>

The mass per tire produced as a sample was measured. The result was indicated as an index with the mass in comparative example 1 being regarded as 100. A smaller numerical value indicates that: the tire was more lightweight; and increase in the mass thereof was suppressed.

**[Table 1]**

| | Comp. Ex. 1 | Ex. 1 | Ex. 2 | Ex. 3 | Ex. 4 | Ex. 5 | Comp. Ex. 2 |
|---|---|---|---|---|---|---|---|
| Thickness T1 of first cord (total fineness (dtex)) | 3340 | 3100 | 2860 | 2600 | 2300 | 2200 | 2200 |
| Thickness T2 of second cord (total fineness (dtex)) | 3340 | 3400 | 3660 | 3900 | 4140 | 4400 | 4820 |
| T2/T 1 | 1.0 | 1.1 | 1.3 | 1.5 | 1.8 | 2.0 | 2.2 |
| Side cut resistance (index) | 100 | 105 | 106 | 108 | 109 | 110 | 111 |
| Tire mass (index) | 100 | 99 | 99 | 99 | 99 | 100 | 105 |

The results of the tests show that, in the pneumatic tire of each example, the side cut resistance was more improved and increase in the mass was more suppressed than in the pneumatic tire of each comparative example.

### [Example B]

Pneumatic tires (example 1 and example 6 to example 9) each of which was the pneumatic tire shown in FIG. 1, were produced as samples on the basis of the specifications in Table 2. Then, for each of the tires produced as samples, the side cut resistance, the tire mass, and the durability were evaluated. The common specifications are the same as those described in Example A, except for the specifications in Table 2 and the specifications described below. The test methods are the same as those described in Example A, except for durability described below.
Thickness T1 of first cord (total fineness): 2200 (dtex)
Thickness T2 of second cord (total fineness): 4400 (dtex)

### <Durability>

Each tire was caused to run under the conditions described below, by using a drum durability tester. Then, on the basis of the distance run until either of the sidewall portions was damaged, an evaluation was made as an index with the distance in example 1 being regarded as 100. A larger numerical value indicates a better durability. If the index is not smaller than 90, the tire has a durability required for pneumatic tires.
Speed: 60 km/h
Load: 14.35 kN

**[Table 2]**

| | Ex. 6 | Ex. 7 | Ex. 8 | Ex. 1 | Ex. 9 |
|---|---|---|---|---|---|
| First ends of first ply (cords/5 cm) | 48 | 48 | 48 | 48 | 48 |
| Second ends of second ply (cords/5 cm) | 33 | 36 | 43 | 48 | 57 |
| Second ends/first ends | 0.69 | 0.75 | 0.90 | 1.00 | 1.19 |
| Side cut resistance (index) | 101 | 103 | 104 | 105 | 106 |
| Tire mass (index) | 95 | 97 | 98 | 99 | 103 |
| Durability (index) | 90 | 96 | 98 | 100 | 92 |

The results of the tests show that, in the pneumatic tire of each example, the side cut resistance was improved and increase in the mass was suppressed. Further, in example 1, example 7, and example 8 in each of which the ratio between the first ends and the second ends fell within the preferable range, the durability was improved more than in the other examples.

## Claims

1. A pneumatic tire (1) comprising:
a tread portion (2);
a pair of sidewall portions (3);
a pair of bead portions (4) having respective bead cores (5) embedded therein; and
a toroidal carcass (6) disposed between the pair of bead portions (4), wherein the carcass (6) includes
a first ply (11) extending on and between the pair of bead portions (4), and
a second ply (12) disposed, in the tread portion (2), outward of the first ply (11) in a tire radial direction and extending on and between the pair of bead portions (4),
the first ply (11) is formed as a layer of first cords (11c), and
the second ply (12) is formed as a layer of second cords (12c),
**characterized in that**
a thickness (T2) of each second cord (12c) is 1.1 to 2.0 times a thickness (T1) of each first cord (1 1c).

2. The pneumatic tire (1) according to claim 1, wherein
the first ply (11) includes
a body portion (11A) extending between the bead cores (5) of the pair of bead portions (4), and
a pair of fold-back portions (11B) folded back, in the pair of respective bead portions (4), around the bead cores (5) from an inner side to an outer side in a tire axial direction.

3. The pneumatic tire (1) according to claim 1 or 2, wherein
the second ply (12) includes
a body portion (12A) extending between the bead cores (5) of the pair of bead portions (4), and
a pair of fold-back portions (12B) folded back, in the pair of respective bead portions (4), around the bead cores (5) from an inner side to an outer side in a tire axial direction.

4. The pneumatic tire (1) according to any one of claims 1 to 3, wherein
each of the first cords (11c) and the second cords (12c) is formed as an organic fiber cord.

5. The pneumatic tire (1) according to claim 4, wherein
second ends representing the number of second cords (12c) that are included among the second cords (12c) and that are disposed per a width of 5 cm of the second ply (12), are not more than first ends representing the number of first cords (11c) that are included among the first cords (11c) and that are disposed per a width of 5 cm of the first ply (11).

6. The pneumatic tire (1) according to claim 5, wherein
the second ends are not less than 0.75 times the first ends.

7. The pneumatic tire (1) according to claim 5 or 6, wherein
the second ends are equal to the first ends.

## Patentansprüche

1. Luftreifen (1), umfassend:
einen Laufflächenabschnitt (2);
ein Paar Seitenwandabschnitte (3);
ein Paar Wulstabschnitte (4), in denen ein jeweiliger Wulstkernen (5) eingebettet ist; und
eine torusförmige Karkasse (6), die zwischen dem Paar Wulstabschnitten (4) angeordnet ist, wobei
die Karkasse (6) umfasst
eine erste Lage (11), die sich auf und zwischen dem Paar Wulstabschnitten (4) erstreckt, und
eine zweite Lage (12), die in dem Laufflächenabschnitt (2) in einer Reifenradialrichtung außen von der ersten Lage (11) angeordnet ist und sich auf und zwischen dem Paar Wulstabschnitten (4) erstreckt,
wobei die erste Lage (11) als eine Schicht aus ersten Korden (11 c) gebildet ist, und
die zweite Lage (12) als eine Schicht aus zweiten Korden (12c) gebildet ist,
**dadurch gekennzeichnet, dass**
eine Dicke (T2) jedes zweiten Kords (12c) das 1,1- bis 2,0-fache einer Dicke (T1) jedes ersten Kords (11c) beträgt.

2. Luftreifen (1) nach Anspruch 1, wobei die erste Lage (11) umfasst
einen Körperabschnitt (11A), der sich zwischen den Wulstkernen (5) des Paares Wulstabschnitten (4) erstreckt, und
ein Paar Umschlagabschnitte (11B), die in dem Paar jeweiliger Wulstabschnitte (4) um die Wulstkerne (5) von einer Innenseite zu einer Außenseite in einer Reifenaxialrichtung umgeschlagen sind.

3. Luftreifen (1) nach Anspruch 1 oder 2, wobei die zweite Lage (12) umfasst
einen Körperabschnitt (12A), der sich zwischen den Wulstkernen (5) des Paares Wulstabschnitten (4) erstreckt, und
ein Paar Umschlagabschnitte (12B), die in dem Paar jeweiliger Wulstabschnitte (4) um die Wulstkerne (5) von einer Innenseite zu einer Außenseite in einer Reifenaxialrichtung umgeschlagen sind.

4. Luftreifen (1) nach einem der Ansprüche 1 bis 3, wobei jeder der ersten Korde (11c) und der zweiten Korde (12c) als ein organischer Faserkord gebildet ist.

5. Luftreifen (1) nach Anspruch 4, wobei zweite Enden, die die Anzahl der zweiten Korde (12c) darstellen, die in den zweiten Korden (12c) enthalten sind und die auf einer Breite von 5 cm der zweiten Lage (12) angeordnet sind, nicht mehr sind als erste Enden, die die Anzahl der ersten Korde (11c) darstellen, die in den ersten Korden (11c) enthalten sind und die auf einer Breite von 5 cm der ersten Lage (11) angeordnet sind.

6. Luftreifen (1) nach Anspruch 5, wobei die zweiten Enden nicht weniger als das 0,75-fache der ersten Enden betragen.

7. Luftreifen (1) nach Anspruch 5 oder 6, wobei die zweiten Enden gleich den ersten Enden sind.

## Revendications

1. Bandage pneumatique (1) comprenant :
une portion formant bande de roulement (2) ;
une paire de portions formant parois latérales (3) ;
une paire de portions de talon (4) ayant des âmes de talon (5) respectives noyées à l'intérieur de celles-ci ; et
une carcasse toroïdale (6) disposée entre la paire de portions de talon (4), dans lequel la carcasse (6) inclut
une première nappe (11) s'étendant sur et entre la paire de portions de talon (4), et
une seconde nappe (12) disposée, dans la portion formant bande de roulement (2), à l'extérieur de la première nappe (11) dans une direction radiale du pneumatique et s'étendant sur et entre la paire de portions de talon (4),
la première nappe (11) est formée en tant que couche de premiers câblés (11c), et
la seconde nappe (12) est formée en tant que couche de seconds câblés (12c),
**caractérisé en ce que**
une épaisseur (T2) de chaque second câblé (12c) est 1,1 à 2,0 fois une épaisseur (T1) de chaque premier câblé (11c).

2. Bandage pneumatique (1) selon la revendication 1, dans lequel la première nappe (11) inclut
une portion de corps (11A) s'étendant entre les âmes de talon (5) de la paire de portions de talon (4), et
une paire de portions rabattues (11B) repliées vers l'arrière, dans la paire de portions de talon (4) respectives, autour des âmes de talon (5) depuis un côté intérieur jusqu'à un côté extérieur dans une direction axiale du pneumatique.

3. Bandage pneumatique (1) selon la revendication 1 ou 2, dans lequel la seconde nappe (12) inclut
une portion de corps (12A) s'étendant entre les âmes de talon (5) de la paire de portions de talon (4), et
une paire de portions rabattues (12B) repliées vers l'arrière, dans la paire de portions de talon (4) respectives, autour des âmes de talon (5) depuis un côté intérieur jusqu'à un côté extérieur dans une direction axiale du pneumatique.

4. Bandage pneumatique (1) selon l'une quelconque des revendications 1 à 3, dans lequel
chacun des premiers câblés (11c) et des seconds câblés (12c) est formé en tant que câblé de fibre organique.

5. Bandage pneumatique (1) selon la revendication 4, dans lequel des secondes extrémités représentant le nombre de seconds câblés (12c) qui sont inclus parmi les seconds câblés (12c) et qui sont disposés par largeur de 5 cm de la seconde nappe (12), ne sont pas plus que des premières extrémités représentant le nombre de premiers câblés (11c) qui sont inclus parmi les premiers câblés (11c) et qui sont disposés par largeur de 5 cm de la première nappe (11).

6. Bandage pneumatique (1) selon la revendication 5, dans lequel les secondes extrémités ne sont pas inférieures à 0,75 fois les premières extrémités.

7. Bandage pneumatique (1) selon la revendication 5 ou 6, dans lequel les seconde extrémités sont égales aux premières extrémités.
